# EUROPÄISCHE PATENTSCHRIFT

(11) **EP 2 294 287 B1**
(45) Veröffentlichungstag und Bekanntmachung des Hinweises auf die Patenterteilung: **14.10.2015**
(21) Anmeldenummer: 09796939.8
(22) Anmeldetag: 10.11.2009
(51) Int. Cl.: F01D 21/00, F01D 21/04, G01H 1/00

(54) **VERFAHREN UND VORRICHTUNG ZUR RISSERKENNUNG AN VERDICHTERLAUFSCHAUFELN**
METHOD AND DEVICE FOR DETECTING CRACKS IN COMPRESSOR BLADES
PROCÉDÉ ET DISPOSITIF DE DÉTECTION DE FISSURES SUR DES AUBES MOBILES D'UN COMPRESSEUR

(30) Priorität: 15.11.2008 DE 102008057556
(43) Veröffentlichungstag der Anmeldung: 16.03.2011
(73) Patentinhaber: MTU Aero Engines AG, 80995 München (DE)
(72) Erfinder: ZIELINSKI, Michael, 85716 Unterschleissheim (DE); ZILLER, Gerhard, 85221 Dachau (DE)
(86) Internationale Anmeldenummer: PCT/DE2009/001599
(87) Internationale Veröffentlichungsnummer: WO 2010/054644

(56) Entgegenhaltungen:
- EP-A2- 1 754 861
- EP-A2- 1 857 637
- US-A- 3 502 967
- US-A1- 2003 060 986
- US-A1- 2006 122 798
- US-A1- 2007 063 697

## Beschreibung

Die vorliegende Erfindung betrifft ein Verfahren und eine Vorrichtung zur Risserkennung an Verdichterlaufschaufeln, und insbesondere zur Risserkennung an Verdichterlaufschaufeln in Turbomaschinen durch Längen- und Entwindungsmessung an den Schaufeln.

Bei einem Einsatz von Turbomaschinen, wie z.B. bei Flugzeugtriebwerken oder Industriegasturbinen, ist die Erkennung von Schaufelrissen, die bei hohen Schwingamplituden entstehen können und schwere Folgeschäden verursachen können, von großer Bedeutung.

Der Abriss einer Schaufel führt meistens zum Totalverlust eines Triebwerks, was während der Triebwerksentwicklung zu Zusatzkosten und Verzögerungen führt, in der Serie aber vor allem auch ein hohes Risiko für Passagiere oder Arbeiter bedeutet.

Aus dem Stand der Technik sind für die Anwendung in Turbomaschinen verschiedene Verfahren zur Risserkennung bekannt.

Ein solches Verfahren basiert auf der Beobachtung, dass sich die Schwingfrequenzen der Schaufeln bei einem Riss verringern.

Zu Beginn einer Versuchskampagne wird mit dem unbeschädigten Rotor eine geeignete Schwingungsresonanz durchfahren und die Lage dieser Resonanz für die einzelnen Schaufeln genau vermessen. Später werden regelmäßig weitere Läufe unter gleichen Bedingungen aufgezeichnet und die Abweichung der Resonanzlagen zu denen des Referenzlaufs bestimmt.

Ein weiteres Verfahren nutzt zur Risserkennung aus, dass sich Schaufeln nach einem Anriss im Fliehkraftfeld und unter der aerodynamischen Last anders verformen als im unbeschädigten Zustand.

Um diese Änderung zu messen, werden aus den Zeitdaten der unter im Gehäuse eingebauten Sensoren vorbeilaufenden Schaufeln die relativen Positionen der Schaufelspitzen auf der Rotorabwicklung berechnet. Dies erfolgt ebenfalls im Vergleich zu einem Referenzlauf mit unbeschädigten Schaufeln. Schaufelrisse äußern sich durch Abweichungen von den Referenzpositionen.

Nachteilig beim Resonanzlageverfahren ist, dass die Resonanzlagen abhängig von den genauen Betriebsbedingungen des Triebwerks streuen. Auch wenn die Messläufe immer unter den gleichen Bedingungen durchgeführt werden, treten noch leichte Streuungen in den Schwingfrequenzen auf

Andererseits zeigt die Erfahrung, dass zumindest bei den Grundschwingungsmoden und Rissen im unteren Bereich des Schaufelblatts schnell Frequenzverschiebungen in einer Größe auftreten können, die problemlos gemessen werden kann. Es sind aber auch Risspositionen möglich, die die Schwingfrequenz einer Resonanz wenig oder gar nicht beeinflussen.

Ein weiterer Aspekt sind temperaturbedingte Frequenzverschiebungen. Diese können herausgerechnet werden, aber natürlich nur so genau, wie die Temperatur der Schaufeln bekannt ist.

Alternativ können die Einzelschaufelverteilungen des Mess- und des Referenzlaufs auf den gleichen Mittelwert geschoben werden. Dies ist problematisch, wenn alle Schaufeln gleichzeitig reißen, was z. B. bei einem schweren Pumpstoß passieren kann.

Ein Nachteil des vorstehend beschriebenen Schaufelpositionsverfahrens ist, dass das Verfahren nicht aussagefähig ist, wenn alle Schaufeln gleichzeitig reißen und sich in Folge alle Schaufeln gleich verbiegen. Dies ist nicht der Fall, wenn gegen ein Signal von der Rotorwelle gemessen wird. Dies hat aber wiederum den Nachteil, dass Wellenimpulse wegen des kleinen Durchmessers der Welle eine schlechte Zeitauflösung liefern, d. h. die Auflösung des Verfahrens insgesamt wird schlechter.

Aus der US 2003/060986 A1 ist eine Vorrichtung und ein Verfahren zur Vorhersage von Versagen rotierender Scheiben in Turbomaschinen bekannt, wobei in einer Ebene senkrecht zur Achse der Turbomaschine über den Umfang verteilte Schaufelspitzensensoren den Schaufeldurchgang erfassen. Die EP 1 754 861 A2 schlägt ebenfalls ein System und ein Verfahren zum Überwachen von Turbomaschinenanordnungen vor, wobei in einer Ebene senkrecht zur Achse der Turbomaschine über den Umfang verteilte Sensoren den Schaufeldurchgang erfassen.

Die US 3,502,967 schlägt ein System zur Erfassung von Torsion und Biegung in Turbinenschaufeln mit in zwei Ebenen senkrecht zur Achse der Turbomaschine über den Umfang verteilten Sensoren vor. Die US 2007/063697 A1 schlägt ein System und ein Verfahren zur temperaturunabhängigen Messung Abstandes mittels Wirbelstromsensoren vor.

Es wird daher nach Möglichkeiten gesucht, Schaufelrisse früh zu erkennen, um geeignete Maßnahmen einleiten zu können, bevor es zu größeren Schäden kommt. Entscheidend bei der Risserkennung ist aber auch, dass es zu keinen Fehlalarmen kommt, da dies zu dann sinnlosen Zusatzkosten führen würde, und mit Blick auf Einsatz in der Serie das Vertrauen in das Risserkennungsverfahren schnell eischüttern würde.

Daher ist es eine Aufgabe der vorliegenden Erfindung, eine verbesserte Vorrichtung und ein verbessertes Verfahren für eine Risserkennung an Verdichterlaufschaufeln bereitzustellen.

Diese Aufgabe wird durch eine Vorrichtung gemäß Anspruch 1 und Anspruch 2, sowie durch ein Verfahren gemäß Anspruch 5 und Anspruch 6 gelöst.

Weitere Merkmale und bevorzugte Weiterbildungen sind in den abhängigen Ansprüchen dargelegt.

Gemäß einem ersten Aspekt der vorliegenden Erfindung wird eine Verdichterstufe mit einer Vorrichtung zur Risserkennung an einer Verdichterlaufschaufel bereitgestellt, die eine Erfassungseinrichtung mit einer Vielzahl in mehreren Ebenen verteilten berührungslosen Sensoren, die in der Umgebung des Rotors angeordnet sind, zum Erfassen von Durchlaufzeiten von Schaufeln an den Sensoren, eine Speichereinrichtung, in der Daten von Referenzläufen bei unterschiedlichen Bedingungen und Drehzahlen gespeichert sind, und eine Analyseeinheit zum Vergleichen der durch die Erfassungseinrichtung erfassten Daten mit entsprechenden Daten aus der Speichereinrichtung umfasst.

Gemäß einem zweiten Aspekt der vorliegenden Erfindung wird eine Verdichterstufe mit einer Vorrichtung zur Risserkennung an einer Verdiehterlaufschaufel bereitgestellt, die eine Erfassungseinrichtung mit einer Vielzahl in mehreren Ebenen verteilten berührungslosen Sensoren, die in der Umgebung des Rotors angeordnet sind, zum Erfassen von relativen und absoluten Änderungen einer Spaltbreite zwischen einer Schaufel und dem Verdichtergehäuse, eine Speichereinrichtung, in der Daten von Referenzläufen bei unterschiedlichen Bedingungen und Drehzahlen gespeichert sind, und eine Analyseeinheit zum Vergleichen der durch die Erfassungseinrichtung erfassten Daten mit entsprechenden Daten aus der Speichereinrichtung umfasst.

Erfindungsgemäß sind die Sensoren in drei Ebenen verteilt, wobei sich eine erste Ebene im Bereich der Vorderkante der Schaufeln, eine zweite Ebene im Bereich der Schaufelmitten und eine dritte Ebene im Bereich der Hinterkante der Schaufeln befindet.

Vorzugsweise führt die Erfassungseinrichtung eine Absolutmessung durch, bei der jeweils eine der Ausgaben der Sensoren in einer der drei Ebenen als Nullpunkt für die Sensoren der anderen beiden Ebenen dient.

Die Sensoren sind vorzugsweise als kapazitive, magnetische, Wirbelstrom- oder Mikrowellensensoren ausgebildet.

Gemäß einem dritten Aspekt der vorliegenden Erfindung wird ein Verfahren zur Risserkennung an einer Verdichterlaufschaufel bereitgestellt, wobei Durchlaufzeiten von Schaufeln an den Sensoren mit einer Vielzahl in mehreren Ebenen verteilten berührungslosen Sensoren erfasst werden, die in der Umgebung des Rotors angeordnet sind, und die bei der Erfassung erfassten Daten mit entsprechenden Daten aus einer Speichereinrichtung verglichen werden, wobei in der Speichereinrichtung Daten von Referenzläufen bei unterschiedlichen Bedingungen und Drehzahlen gespeichert sind.

Gemäß einem vierten Aspekt der vorliegenden Erfindung wird ein Verfahren zur Risserkennung an einer Verdichterlaufschaufel bereitgestellt, wobei relative und absolute Änderungen einer Spaltbreite zwischen einer Schaufel und dem Verdichtergehäuse mit einer Vielzahl in mehreren Ebenen verteilten berührungslosen Sensoren erfasst werden, die in der Umgebung des Rotors angeordnet sind, und die bei der Erfassung erfassten Daten mit entsprechenden Daten aus einer Speichereinrichtung verglichen werden, wobei in der Speichereinrichtung Daten von Referenzläufen bei unterschiedlichen Bedingungen und Drehzahlen gespeichert sind.

Gemäß einem fünften Aspekt der vorliegenden Erfindung wird ein System zur Risserkennung an einer Verdichterlaufschaufel bereitgestellt, das eine Vorrichtung gemäß dem ersten Aspekt und eine Vorrichtung gemäß dem zweiten Aspekt der vorliegenden Erfindung umfasst.

Anhand der nachfolgenden Beschreibung eines bevorzugten Ausführungsbeispiels, das unter Bezugnahme auf die anhängende Zeichnung erläutert wird, wird der Gegenstand der vorliegenden Erfindung ersichtlich.

In der Zeichnung gilt:

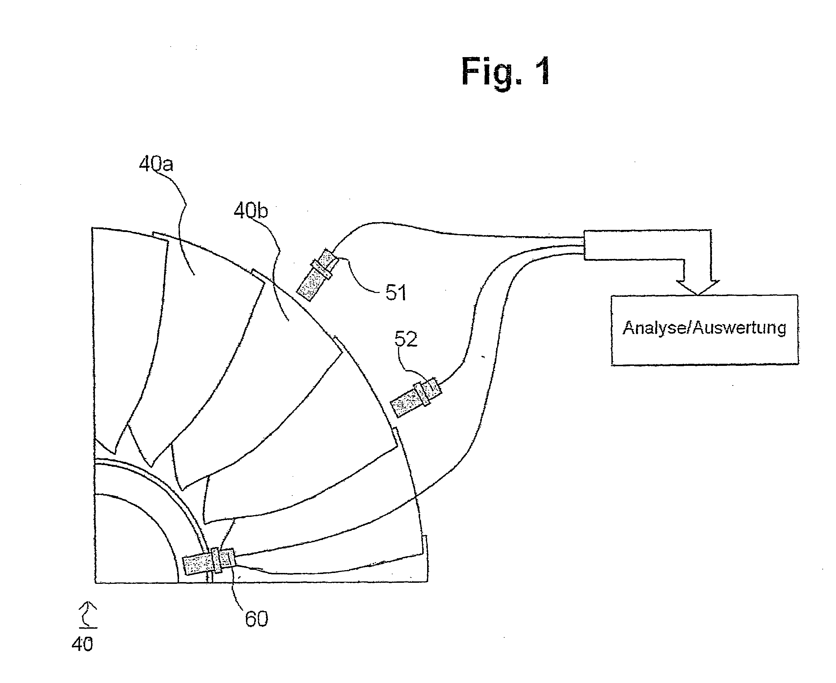

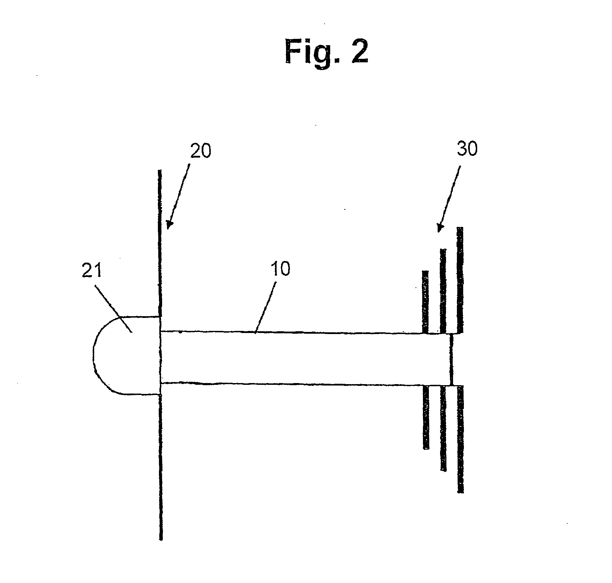

Fig. 1 zeigt eine Prinzipskizze einer berührungslosen Schaufelschwingungsmessung mit kapazitiven Sensoren gemäß einem Ausführungsbeispiel.

Gemäß der vorliegenden Erfindung wird ein Gerät zur berührungslosen Schwingungs- und Spaltmessung bereitgestellt, das kapazitive Sensoren im Triebwerksgehäuse über den Rotoren sowohl zur Schwingungs- als auch zur Radialspaltmessung an den Laufschaufeln von Axialverdichtern verwendet.

Anstatt der kapazitiven Sensoren können auch andere Sensoren verwendet werden, wie beispielsweise magnetische Sensoren, Wirbelstromsensoren oder Mikrowellensensoren.

Grundprinzip der Schwingungsmessung ist eine Laufzeitmessung, wobei schwingende Schaufeln abhängig vom momentanen Auslenkungszustand früher oder später an den Sensoren vorbei kommen.

Die Spaltinformation steckt in der Variation der Signalamplitude, wenn die Schaufeln unter einer Sonde durchlaufen. Durch Analyse der Durchlaufzeiten und der Variation der Signalamplituden können Schwingungsfrequenzen, Schwingamplituden und Radialspalte aller Schaufeln einer Rotorstufe bestimmt werden.

Die kapazitiven Sensoren 51, 52, liefern letztlich die Durchlaufzeiten der Schaufeln an den Sensoren und den Spalt zwischen den Schaufelspitzen und dem Verdichtergehäuse.

Fig. 1 zeigt einen Ausschnitt aus einer Verdichterstufe 40 mit einer Vielzahl von Verdichterschaufeln 40a, 40b. In einem bestimmten Abstand sind kapazitive Sensoren 51, 52 angeordnet, die die Durchläufe der Schaufeln erfassen können. Dabei schwanken die Durchlaufzeiten der Schaufeln bei Auftreten von Schwingungen, wobei die Schwankungen von der Schwingungsfrequenz sowie der Schwingungsamplitude abhängen.

Weiterhin ist, wie in Fig. 1 gezeigt, ein Sensor 60 angebracht, der einen Impuls pro Umlauf abgibt, wobei die von den Sensoren 51, 52 erfassten Werte mit diesem Impuls korreliert werden können.

Um möglichst viele Schwingmoden erfassen zu können und in diesem Zusammenhang die Probleme mit Schwingungsknoten an der Schaufelspitze zu verkleinern - ein Sensor an einem Schwingungsknoten sieht diese Schwingung nicht -, werden die Sensoren nicht in einer Ebene über dem Rotor angeordnet, sondern typischerweise auf drei Ebenen verteilt, eine nahe der Vorderkante, eine im Bereich der Schaufelmitte und eine dritte nahe der Hinterkante der Schaufel. Daraus ergibt sich die Möglichkeit, mehr Informationen über potentielle Schaufelrisse zu erhalten.

Ein Verfahren gemäß einem ersten Ausführungsbeispiel stellt eine Erweiterung des Schaufelpositionsverfahrens dar. Hier werden jetzt aber nicht die relativen Positionen der Schaufeln zueinander bestimmt und mit einem Referenzlauf verglichen, sondern für jede Schaufel die Positionen der Vorderkante, Mitte und Hinterkante zueinander.

Es wird also quasi der Staffelwinkel jeder Schaufel gemessen und mit dem Wert des Referenzlaufs verglichen.

Dies ist eine Absolutmessung, da einer der drei Messwerte jeder Schaufel als Nullpunkt für die beiden anderen angesehen werden kann. Wenn alle Schaufeln gleichzeitig reißen, ändern sich die Staffelwinkel aller Schaufeln, und dies wird dann von dem Verfahren auch erfasst.

Ein Verfahren gemäß einem zweiten Ausführungsbeispiel verwendet Spaltmessdaten. Es basiert auf der Annahme, dass sich die Länge einer Schaufel im Fliehkraftfeld mit einem Riss ändert, und damit auch der Spalt zum Gehäuse.

Wieder wird mit einem Referenzlauf unter definierten Bedingungen das Schaufellängenprofil des intakten Rotors gemessen und dann die Ergebnisse späterer Messläufe mit dem Referenzprofil verglichen. Ein Schaufelriss wird sich durch eine relative und absolute Verkleinerung des Spalts bzw. Verlängerung der Schaufel bemerkbar machen. Diese Messung kann auf allen axialen Messebenen durchgeführt werden, so dass das Verfahren auch sensitiv ist, wenn der Riss nur Wirkung an der Vorderkante oder nur an der Hinterkante der Schaufel hat.

Ein weiterer positiver Aspekt dieses Verfahrens ist, dass hiermit auch Risse detektiert werden können, die die Frequenz einer Resonanz nur schwach beeinflussen, also z. B. ein Riss, der durch einen höheren Schwingmode im oberen Teil der Schaufel erzeugt wird, und keine Wirkung auf die Frequenz einer Resonanz eines Grundmodes, also etwa des ersten Biegemodes oder des ersten Torsionsmodes der Schaufel hat.

Auch Scheibenrisse können erfasst werden. Je nachdem, wie der Riss in der Scheibe verläuft, können sich durch den Riss die radiale Position und die Umfangsposition der Schaufeln im Bereich des Risses relativ zum ungestörten Zustand ändern. Zum anderen kann ein Riss in der Scheibe auch die Wuchtsituation des Rotors beeinflussen. Dies kann zu Rotor-Orbiting führen, einer mehr oder weniger kreisförmigen radialen Bewegung der Rotorachse relativ zur Gehäuseachse.

Es können ebenso alle vorstehenden Verfahren gleichzeitig zum Einsatz kommen, d. h. es können Resonanzlage, Schaufelposition, Schaufelentwindung, Schaufellänge und Rotor-Orbiting betrachtet werden. Dies zusammen gibt eine hohe Sicherheit, Schaufelrisse und Scheibenrisse zu erkennen.

Bei der Aufnahme der Referenzläufe können Daten bei unterschiedlichen Bedingungen bzw. Drehzahlen bei konstanter oder veränderlicher Drehzahl aufgenommen werden. Weiterhin kann das Aufnahmesystem als lernendes System für Serienanwendungen ausgebildet sein, in der Referenzprofile automatisch aufgenommen und in einer sich ständig erweiternden Bibliothek abgelegt werden. Demzufolge können aktuelle Messungen ständig und automatisch durchgeführt und mit den passenden Referenzläufen in der Bibliothek verglichen werden.

Auf der Basis eines Schaufelmodells bzw. Schaufelscheibenmodells können Berechnungen theoretischer Änderungen von Frequenzen, Schaufelpositionen, Schaufellängen und Wuchtstatus für verschiedene Risspositionen und Risslängen durchgeführt werden und Alarmlevels definiert werden. Daraus können optimierte Systemeinstellungen, wie etwa Sensorpositionen oder Resonanzen abgeleitet werden.

Ebenso gilt, dass mit der Zahl der verwendeten Sonden die Messgenauigkeit bzw. die Sensitivität des Messverfahrens zunimmt.

## Patentansprüche

1. Verdichterstufe (40) umfassend eine Vorrichtung zur Risserkennung an Verdichterlaufschaufeln (40a, 40b), mit:
einer Erfassungseinrichtung mit berührungslosen Sensoren (51,52), die in der Umgebung des Rotors angeordnet sind, zum Erfassen von Durchlaufzeiten von Schaufeln an den Sensoren;
einer Speichereinrichtung, in der Daten von Referenzläufen bei unterschiedlichen Bedingungen und Drehzahlen gespeichert sind; und
einer Analyseeinheit zum Vergleichen der durch die Erfassungseinrichtung erfassten Daten mit entsprechenden Daten aus der Speichereinrichtung, **dadurch gekennzeichnet, dass** die Sensoren in drei zur Achse der Turbomaschine senkrechten Ebenen verteilt sind, wobei sich eine erste Ebene im Bereich der Vorderkante der Schaufeln, eine zweite Ebene im Bereich der Schaufelmitten und eine dritte Ebene im Bereich der Hinterkante der Schaufeln befindet.

2. Verdichterstufe (40) umfassend eine Vorrichtung zur Risserkennung an Verdichterlaufschaufeln (40a, 40b), mit:
einer Erfassungseinrichtung mit berührungslosen Sensoren (51,52), die in der Umgebung des Rotors angeordnet sind, zum Erfassen von relativen und absoluten Änderungen einer Spaltbreite zwischen einer Schaufel und dem Verdichtergehäuse;
einer Speichereinrichtung, in der Daten von Referenzläufen bei unterschiedlichen Bedingungen und Drehzahlen gespeichert sind; und
einer Analyseeinheit zum Vergleichen der durch die Erfassungseinrichtung erfassten Daten mit entsprechenden Daten aus der Speichereinrichtung, **dadurch gekennzeichnet, dass** die Sensoren in drei zur Achse der Turbomaschine senkrechten Ebenen verteilt sind, wobei sich eine erste Ebene im Bereich der Vorderkante der Schaufeln, eine zweite Ebene im Bereich der Schaufelmitten und eine dritte Ebene im Bereich der Hinterkante der Schaufeln befindet.

3. Vorrichtung gemäß Anspruch 1 oder 2, wobei
die Erfassungseinrichtung eine Absolutmessung durchführt, bei der jeweils eine der Ausgaben der Sensoren in einer der drei Ebenen als Nullpunkt für die Sensoren der anderen beiden Ebenen dient.

4. Vorrichtung gemäß einem der Ansprüche 1 bis 3, wobei die Sensoren als kapazitive, magnetische, Wirbelstrom- oder Mikrowellensensoren ausgebildet sind.

5. Verfahren zur Risserkennung an Verdichterlaufschaufein (40a, 40b) einer Turbomaschine, mit den Schritten:
Erfassen von Durchlaufzeiten von Schaufeln an berührungslosen Sensoren (51, 52) die in der Umgebung des Rotors angeordnet sind; und
Vergleichen der bei dem Schritt des Erfassens erfassten Daten mit entsprechenden Daten aus einer Speichereinrichtung, wobei in der Speichereinrichtung Daten von Referenzläufen bei unterschiedlichen Bedingungen und Drehzahlen gespeichert sind, **dadurch gekennzeichnet, dass** die Sensoren in drei zur Achse der Turbomaschine senkrechten Ebenen verteilt sind, wobei sich eine erste Ebene im Bereich der Vorderkante der Schaufeln, eine zweite Ebene im Bereich der Schaufelmitten und eine dritte Ebene im Bereich der Minterkante der Schaufeln befindet.

6. Verfahren zur Risserkennung an Verdichterlaufschaufeln (40a, 40b) einer Turbomaschine, mit den Schritten:
Erfassen von relativen und absoluten Änderungen einer Spaltbreite zwischen einer Schaufel und dem Verdichtergehäuse mit berührungslosen Sensoren (51, 52) die in der Umgebung des Rotors angeordnet sind; und
Vergleichen der bei dem Schritt des Erfassens erfassten Daten mit entsprechenden Daten aus einer Speichereinrichtung, wobei in der Speichereinrichtung Daten von Referenzläufen bei unterschiedlichen Bedingungen und Drehzahlen gespeichert sind, **dadurch gekennzeichnet, dass** die Sensoren in drei zur Achse der Turbomaschine senkrechten Ebenen verteilt sind, wobei sich eine erste Ebene im Bereich der Vorderkante der Schaufeln, eine zweite Ebene im Bereich der Schaufelmitten und eine dritte Ebene im Bereich der Minterkante der Schaufeln befindet.

7. Verfahren gemäß Anspruch 5 oder 6, wobei
bei der Erfassung eine Absolutmessung durchgeführt wird, bei der jeweils eine der Ausgaben der Sensoren in einer der drei Ebenen als Nullpunkt für die Sensoren der anderen beiden Ebenen dient

8. Verfahren gemäß einem der Ansprüche 5 bis 7, wobei die Sensoren als kapazitive, magnetische, Wirbelstrom- oder Mikrowellensensoren ausgebildet sind.

## Claims

1. Compressor stage (40) comprising a device for detecting ruptures on compressor blades (40a, 40b), having:
a recording device having contactless sensors (51, 52) that are arranged in the vicinity of the rotor for recording throughput times of blades on the sensors;
a storage device in which data from reference runs under different conditions and with different rotational speeds are stored; and
an analysis unit for comparing the data recorded by the recording device with corresponding data from the storage device, **characterised in that** the sensors are distributed into three planes that are perpendicular to the axis of the turbo machine, wherein a first plane is located in the region of the front edge of the blades, a second plane is located in the region of the blade centres and a third plane is located in the region of the rear edge of the blades.

2. Compressor stage (40) comprising a device for detecting ruptures on compressor blades (40a, 40b), having:
a recording device having contactless sensors (51, 52) that are arranged in the vicinity of the rotor for recording relative and absolute alterations to a gap width between a blade and the compressor housing;
a storage device in which data from reference runs under different conditions and with different rotational speeds are stored; and
an analysis unit for comparing the data recorded by the recording device with corresponding data from the storage device, **characterised in that** the sensors are distributed into three planes that are perpendicular to the axis of the turbo machine, wherein a first plane is located in the region of the front edge of the blades, a second plane is located in the region of the blade centres and a third plane is located in the region of the rear edge of the blades.

3. Device according to claim 1 or 2, wherein the recording device carries out an absolute measurement in which one of the outputs of the sensors in one of the three planes serves as a zero point for the sensors of the other two planes.

4. Device according to one of claims 1 to 3, wherein the sensors are designed as capacitive, magnetic, eddy current or microwave sensors.

5. Method for detecting ruptures on compressor blades (40a, 40b) of a turbo machine, having the steps:
recording of throughput times of blades (51, 52) that are arranged in the vicinity of the rotor; and
comparing the data recorded in the recording step with corresponding data from a storage device, wherein data from reference runs under different conditions and with different rotational speeds are stored in the storage device,
**characterised in that** the sensors are distributed into three planes that are perpendicular to the axis of the turbo machine, wherein a first plane is located in the region of the front edge of the blades, a second plane is located in the region of the blade centres and a third plane is located in the region of the rear edge of the blades.

6. Method for detecting ruptures on compressor blades (40a, 40b) of a turbo machine, having the steps:
recording relative and absolute alterations to a gap width between a blade and the compressor housing with contactless sensors (51, 52) that are arranged in the vicinity of the rotor; and
comparing the data recorded in the recording step with corresponding data from a storage device, wherein data from reference runs under different conditions and with different rotational speeds are stored in the storage device, **characterised in that** the sensors are distributed into three planes that are perpendicular to the axis of the turbo machine, wherein a first plane is located in the region of the front edge of the blades, a second plane is located in the region of the blade centres and a third plane is located in the region of the rear edge of the blades.

7. Method according to claim 5 or 6, wherein, during the recording, an absolute measurement is carried out in which one of the outputs of the sensors in one of the three planes serves as a zero point for the sensors of the other two planes.

8. Method according to one of claims 5 to 7, wherein the sensors are designed as capacitive, magnetic, eddy current or microwave sensors.

## Revendications

1. Etage de compresseur (40), équipé d'un dispositif servant à identifier des fissures sur des aubes mobiles de compresseur (40a, 40b), comprenant :
un dispositif de détection comprenant des capteurs (51, 52) sans contact, qui sont disposés à proximité immédiate du rotor, servant à détecter des temps de passage d'aubes au niveau des capteurs ;
un dispositif de mémorisation, dans lequel des données de courses de référence sont mémorisées pour des conditions et des vitesses de rotation différentes; et
une unité d'analyse servant à comparer les données détectées par le dispositif de détection à des données correspondantes provenant du dispositif de mémorisation, **caractérisé en ce que** les capteurs sont répartis dans trois plans perpendiculaires par rapport à l'axe de la turbomachine, un premier plan se trouvant dans la zone de l'arête avant des aubes, un deuxième plan se trouvant dans la zone des centres d'aube et un troisième plan se trouvant dans la zone de l'arête arrière des aubes.

2. Etage de compresseur (40) équipé d'un dispositif servant à identifier des fissures sur des aubes de compresseur (40a, 40b), comprenant :
un dispositif de détection comprenant des capteurs (51, 52) sans contact, qui sont disposés à proximité immédiate du rotor, servant à détecter des modifications relatives et absolues d'une largeur de fente entre une aube et le carter de compresseur;
un dispositif de mémorisation, dans lequel des données de courses de référence sont mémorisées pour des conditions et des vitesses de rotation différentes ; et
une unité d'analyse servant à comparer des données détectées par le dispositif de détection à des données correspondantes provenant du dispositif de mémorisation, **caractérisé en ce que** les capteurs sont répartis dans trois plans perpendiculaires par rapport à l'axe de la turbomachine, un premier plan se trouvant dans la zone de l'arête avant des aubes, un deuxième plan se trouvant dans la zone des centres d'aube et un troisième plan se trouvant dans la zone de l'arête arrière des aubes.

3. Dispositif selon la revendication 1 ou 2, le dispositif de détection effectuant une mesure absolue, dans le cadre de laquelle respectivement une des informations émises par les capteurs dans l'un des trois plans fait office de point nul pour les capteurs des deux autres plans.

4. Dispositif selon l'une quelconque des revendications 1 à 3, les capteurs étant réalisés sous la forme de capteurs capacitifs, de capteurs magnétiques, de capteurs à courants de Foucault ou de capteurs à micro-ondes.

5. Procédé servant à identifier des fissures sur des aubes mobiles de compresseur (40a, 40b) d'une turbomachine, comprenant les étapes suivantes consistant à :
détecter des temps de passage d'aubes au niveau de capteurs (51, 52) sans contact, qui sont disposés à proximité immédiate du rotor ; et
comparer les données détectées lors de l'étape de la détection à des données correspondantes provenant d'un dispositif de mémorisation, des données de courses de référence étant mémorisées dans le dispositif de mémorisation pour des conditions et des vitesses de rotation différentes,
**caractérisé en ce que** les capteurs sont répartis dans trois plans perpendiculaires par rapport à l'axe de la turbomachine, un premier plan se trouvant dans la zone de l'arête avant des aubes, un deuxième plan se trouvant dans la zone des centres d'aube et un troisième plan se trouvant dans la zone de l'arête arrière des aubes.

6. Procédé servant à identifier des fissures sur des aubes de compresseur (40a, 40b) d'une turbomachine, comprenant les étapes suivantes consistant à :
détecter des modifications relatives et absolues d'une largeur de fente entre une aube et le carter de compresseur avec des capteurs (51, 52) sans contact, qui sont disposés à proximité immédiate du rotor ; et
comparer les données détectées lors de l'étape de la détection aux données correspondantes provenant d'un dispositif de mémorisation, des données de courses de référence étant mémorisées pour des conditions et des vitesses de rotation différentes dans le dispositif de mémorisation,
**caractérisé en ce que** les capteurs sont répartis dans trois plans perpendiculaires par rapport à l'axe de la turbomachine, un premier plan se trouvant dans la zone de l'arête avant des aubes, un deuxième plan se trouvant dans la zone des centres d'aube et un troisième plan se trouvant dans la zone de l'arête arrière des aubes.

7. Procédé selon la revendication 5 ou 6, une mesure absolue étant effectuée lors de la détection, dans le cadre de laquelle une des informations émises par les capteurs dans l'un des trois plans fait office de point zéro pour les capteurs des deux autres plans.

8. Procédé selon l'une quelconque des revendications 5 à 7, les capteurs étant réalisés sous la forme de capteurs capacitifs, de capteurs magnétiques, de capteurs à courants de Foucault ou de capteurs à micro-ondes.
